# EUROPÄISCHE PATENTSCHRIFT

(11) **EP 3 932 655 B1**
(45) Veröffentlichungstag und Bekanntmachung des Hinweises auf die Patenterteilung: **27.03.2024**
(21) Anmeldenummer: 21181825.7
(22) Anmeldetag: 25.06.2021
(51) Int. Cl.: B29C 65/18, B29C 65/78, B65B 11/02, B65B 25/00, B65B 55/00, B29C 65/36

(54) **VERFAHREN ZUM VERPACKEN VON EMPFINDLICHEN PRODUKTEN**
METHOD FOR PACKAGING SENSITIVE PRODUCTS
PROCÉDÉ D'EMBALLAGE DES PRODUITS SENSIBLES

(30) Priorität: 01.07.2020 DE 102020117369
(43) Veröffentlichungstag der Anmeldung: 05.01.2022
(73) Patentinhaber: Theegarten-Pactec GmbH & Co. KG, 01237 Dresden (DE)
(72) Erfinder: Menter, Daniel, 01097 Dresden (DE); Oehlert, Volker, 01809 Dohna (DE)
(74) Vertreter: Grünecker Patent- und Rechtsanwälte PartG mbB

(56) Entgegenhaltungen:
- EP-A2- 0 965 525
- DE-U- 1 893 044
- GB-A- 1 011 727

## Beschreibung

Die vorliegende Erfindung betrifft ein Verfahren zum Verpacken von empfindlichen Produkten, insbesondere wärmeempfindlichen Lebensmittelprodukten wie Schokoladenerzeugnissen.

Bei der Herstellung von z.B. Falteinschlägen von Schokoladenstücken oder Schokoladenriegeln wird ein Packmittelzuschnitt um ein Produkt herumgefaltet und die Faltung durch Ansiegeln fixiert, indem eine Siegeleinrichtung von außen nach Herstellung des Falteinschlags mit dem Packmittel in Kontakt gebracht wird, um die Packmittellagen miteinander zu verbinden. Bei einem Falteinschlag werden Überlappungsnähte erzeugt, wobei die Siegelwärme nur von einer Seite (von außen) in die Siegelnaht eingebracht wird. Auf der Innenseite der Siegelnaht befindet sich das Produkt. Wesentliche Einflussfaktoren für ein erfolgreiches Ansiegeln oder Versiegeln von Packmitteln sind die Parameter Siegeltemperatur, Siegeldruck und Siegeldauer, welche im unmittelbaren Zusammenhang mit den Eigenschaften des zu siegelnden Packmittels stehen (z.B. Art und Dicke des Packmittels, Siegelbeschichtung). Hinzu kommen weitere Randbedingungen, die die Wahl der Siegelparameter einschränken. Dies ist insbesondere bei druck- und temperaturempfindlichen Produkten, z.B. den erwähnten Schokoladenprodukten, von Bedeutung. Durch packmittel- und produktspezifischer Parametrisierung hinsichtlich Siegeltemperatur, Siegelzeit und Siegeldruck kann der Prozess an unterschiedliche Randbedingungen angepasst werden. Beispielsweise wird durch den Siegeldruck eines Siegelstempels gegen das Produkt sichergestellt, dass ein ausreichender Kontakt der Siegelflächen zueinander sowie auch zum Siegelstempel vorhanden ist. Das ist eine wesentliche Voraussetzung für einen guten Wärmeübergang von einer Oberfläche an die benachbarte Oberfläche.

Alternativ sind auch Erwärmungsprozesse bekannt, bei denen der Wärmeeintrag in die Siegelnaht mittels Induktionserwärmung erfolgt. Hierbei wird die notwendige Wärme unmittelbar in der Siegelnaht erzeugt. Voraussetzung ist jedoch, dass das Packmittel eine entsprechende elektrische Leitfähigkeit aufweist und dessen Struktur so gestaltet ist, dass durch Einwirkung eines Wechselfeldes Ummagnetisierungsverluste entstehen, wodurch Wärme erzeugt wird.

Auch wenn bei einem induktionsbasierten Erwärmungsprozess die einzubringende Wärme reduziert werden kann und sich das damit vorteilhaft auf die Produktschonung auswirkt, so hat dieser den Nachteil, dass nur ganz spezielle Folien verarbeitbar sind, was eine breite Anwendung einschränkt. Neben einem Mono-Basismaterial sind Zusatzstoffe erforderlich, um die notwendigen physikalischen Eigenschaften zu gewährleisten. Das erhöht nicht nur die Herstellkosten, sondern verschlechtert u.U. auch den Recyclingprozess.

Bei einer Kontakterwärmung zum Ansiegeln einer Überlappungs-Siegelnaht gibt es insbesondere bei temperatur- und druckempfindlichen Produkten wie Schokoladenstücken oder Schokoladenriegeln extreme Grenzen. Auf der Innenseite des Packmittels ist das Produkt angeordnet, welches den entsprechenden Siegelgegendruck aufbringt. Hierdurch ergibt sich einerseits eine Beschränkung des möglichen Siegeldruckes, da sonst die Produkte zerdrückt werden. Andererseits wird von außen einseitig Wärme durch das Siegelelement in das Packmittel eingebracht, um den Siegelvorgang zu ermöglichen. Hierbei stellt sich ein Temperaturprofil in den Packmittelschichten ein, wobei eine bestimmte Wärmemenge auch weiter als nur in das Packmittel eindringt und auch das Produkt erwärmt, mit dem sich das Packmittel in Kontakt befindet.

Um dem Wärmeübergang auf das Produkt entgegenzuwirken, wird aktuell ein zusätzlicher Inneneinschlag (partiell oder vollständig) um das Produkt gefaltet, welcher als Wärmeschutzbarriere dient. Dies führt aber zu deutlich höherem Packmittelverbrauch und gestaltet die Verpackungsmaschine aufwändiger.

Weiterhin ist auch die Anwendung von Monofolien bekannt, die mit einer Siegelbeschichtung ausgestattet sind. Hierbei erfolgt die Dimensionierung der Siegelschicht so, dass die Siegelbeschichtung schon bei verhältnismäßig niedriger Temperatur aufschmilzt und eine Verbindung eingeht, bevor die Monofolie aufschmilzt. Hierdurch kann die einzuwirkende Siegeltemperatur abgesenkt werden, wenngleich auch hier eine thermische Belastung des Produktes nicht ausgeschlossen werden kann. Zudem sind derartige Folien kostenintensiver in der Herstellung.

Aktuelle Marktentwicklungen erfordern, nachhaltige Packmittel (z.B. Monofolie) für die Verpackung von Süßwaren zu verwenden und auch den Packmittelverbrauch zu senken. Dem wird insbesondere ein Falteinschlag mit Überlappungsnähten am ehesten gerecht, im Gegensatz zu Schlauchbeuteln oder anderen luftdichten Falteinschlägen, bei denen Flossennähte erstellt werden.

Die GB 1 011 727 A und die DE 18 93 044 U befassen sich mit dem Verpacken von insbesondere Zigarettenschachteln mit einer thermoplastischen Folie. Ein Hauptziel der dort beschriebenen Erfindung besteht darin, Wärme gezielt in eine Überlappungsnaht einzubringen, während angrenzende Bereiche des Verpackungsmaterials gekühlt werden. Ein weiterer Aspekt besteht darin, den unteren Kantenbereich der Überlappungsnaht gegen den oberen Kantenbereich der Überlappungsnaht anzupressen. Gemäß einer Ausführungsform (siehe Figur 9) ist hierzu vorgesehen, dass der obenliegende Kantenbereich der Überlappungsnaht Öffnungen aufweist und der die Verschweißung bewirkende Heizstab mit zu den Öffnungen fluchtende Bohrungen versehen ist, die zu einem Saugkanal führen. Hierdurch kann der untenliegende Kantenbereich durch die Öffnungen hindurch angesaugt und somit gegen die Unterseite des oberen Kantenbereichs gedrückt werden, während der Heizstab auf die Überlappungsnaht gedrückt ist. Mittels Kühlbacken werden die zur Überlappungsnaht angrenzenden Zonen des Verpackungsmaterials gekühlt.

Die EP 0 965 525 A2 befasst sich mit dem Ausformen einer Schlauchverpackung aus einem versiegelungsfähigen Material. Verpackt werden insbesondere wärmeempfindliche Produkte, z.B. Schokolade. Aus einem bahnförmigen Verpackungsmaterial wird ein Schlauch um einen Füllschacht geformt. Die sich überlappenden Kantenbereiche werden mittels eines Heizstabs und einer an der Außenseite des Füllschachts angeordneten Materialführung verschweißt (siehe Figuren 8 und 9). Aufgrund der innenliegenden Führungsleiste entsteht ein Spalt zwischen dem Verpackungsmaterial und dem Füllschacht, so dass sich eine wärmeisolierende Luftschicht ausbildet.

Verfahren und Vorrichtungen zum Versiegeln und Verschließen von Verpackungen sind z.B. aus der DE 693 00 459 T2, der DE 195 21 476 A1 und der DE 24 25 821 A bekannt.

Der vorliegenden Erfindung liegt daher die Aufgabe zugrunde, ein verbessertes Verfahren zum Verpacken von empfindlichen Produkten bereitzustellen.

Diese Aufgabe wird durch ein Verfahren gemäß Anspruch 1 gelöst. Das Verfahren zum Verpacken von empfindlichen Produkten, insbesondere wärmeempfindlichen Lebensmittelprodukten wie Schokoladenerzeugnissen, weist hierzu folgende Schritte auf:
Umhüllen des Produkts mit einem warmsiegelungsfähigen Packmittelzuschnitt, wobei zumindest eine Überlappungsnaht erzeugt wird, bei der eine Innenseite eines ersten Kantenbereichs (Außeneinschlag) auf die Außenseite eines zweiten Kantenbereichs (Inneneinschlag) des Packmittelzuschnitts gefaltet wird,
Fixieren der Überlappungsnaht mittels Warmsiegeln, indem eine Siegeleinrichtung von außen mit der Überlappungsnaht in Kontakt gebracht wird, und
zumindest zeitweises Abheben der Überlappungsnaht von dem Produkt beim Fixierschritt, so dass sich die Überlappungsnaht zumindest zeitweise nicht im Kontakt mit dem Produkt befindet, wobei die Überlappungsnaht zum Abheben angesaugt wird.

Mit der vorliegenden Erfindung wird das grundsätzliche Problem des Wärmeüberganges vom Packmittel auf das Produkt gelöst, indem sich das Packmittel zumindest im Bereich der Überlappungsnaht während des Fixierschritts (Siegelvorgang), zumindest zeitweise, nicht im Kontakt mit dem Produkt befindet. Sobald dieser Kontakt aufgehoben wird, wirkt das dazwischen befindliche Luftpolster als Isolator und schützt das Produkt vor thermischer Belastung. Gleichfalls wird der Gegendruck, der sonst bei bekannten Verfahren auf das Produkt wirkt, zumindest reduziert oder vermieden, wodurch auch die mechanische Belastung des Produkts zumindest abgesenkt oder sogar vermieden werden kann. Damit wird sichergestellt, dass bei temperatur- und druckempfindlichen Produkten wie z.B. Schokoladenstücken oder Schokoladenriegeln, möglichst keine Produktbeschädigungen erfolgen. Eine Überlappungsnaht hat auch den Vorteil, dass mit dieser in einem einzigen Verarbeitungsschritt (Versiegelung) die Verpackung verschlossen werden kann. Es sind keine nachfolgenden Zusatzmaßnahmen, wie z.B. das Heranfalten und Fixieren einer abstehenden Flossennaht am Produkt notwendig, um das abschließende Verpackungsergebnis zu erzielen. Weiterhin ist es mit diesem Verfahren auch möglich, verbrauchergerechte Verpackungen herzustellen, welche ohne große Krafteinwirkung und ohne zusätzliche Hilfsmittel zu öffnen sind.

Neben dem Bereitstellen eines ausreichenden Siegeldrucks durch das Ansaugen, hat eine Ansaugung auch weitere Vorteile. Die für die Ansaugung erzeugte, auf der Außenseite des Packmittels stattfindende Luftströmung hat einen Kühleffekt. Prinzipiell kann auch die erwärmte Umgebungsluft abgesaugt werden (z.B. während sich der Stempel nicht im Kontakt mit der Siegelnaht befindet), wodurch eine entsprechende Kühlwirkung entsteht. Bei Siegeleinrichtungen mit aktiver Wärmequelle wird durch den Luftstrom auch der noch geringfügig wirkenden Strahlungswärme der Siegeleinrichtung entgegengewirkt. Bei der Verwendung des Ansaugens handelt es sich auch um eine einfach umzusetzende Abhebetechnik, zumal die die Ansaugung erzeugenden Mittel auch entfernt von der eigentlichen Siegelstelle angeordnet werden können.

Bevorzugt erfolgt das Abheben der Überlappungsnaht derart, dass aufgrund dieses Abhebevorgangs ein ausreichender Siegeldruck zwischen Überlappungsnaht und der Siegeleinrichtung erzeugt wird. Im physikalischen Sinne werden hierzu Anziehungskräfte zwischen der Siegeleinrichtung und der Überlappungsnaht erzeugt, die zu einem entsprechenden Andrücken der Überlappungsnaht an die Siegeleinrichtung führen.

Bei einer weiteren vorteilhaften Ausgestaltung wird das Ansaugen mittels der Siegeleinrichtung durchgeführt. Die Siegeleinrichtung erfüllt demnach eine Doppelfunktion, so dass in der Kombination von Wärmeeinbringung und Ansaugung ein vorteilhaftes Zusammenspiel generiert werden kann.

Günstigerweise kann mittels der Siegeleinrichtung ein flächiges Ansaugen des Packmittelzuschnitts, bevorzugt über die Überlappungsnaht hinaus erfolgen, so dass sich ein verändernder Siegeldruck an der Überlappungsnaht einstellt, der mit zunehmender Überdeckung von Au-ßen- und Inneneinschlag abnimmt. Auf den Siegeldruck nimmt auch das Steifigkeitsverhalten des Packmittels Einfluss. Dieser ist im Bereich der Packmittelkante des Außeneinschlags (Au-ßenfalte) zum Inneneinschlag (Innenfalte) aufgrund des Ansaugens am größten. Hierdurch erfolgt insbesondere im Bereich der Außenkante eine stärkere Versiegelung, was für die weitere Verarbeitung der verpackten Produkte von Vorteil sein kann. Nachdem das Packmittel selbst Einfluss auf diesen Vorgang hat, stellen auch gewisse Änderungen in der Lage der Überlappungsnaht zur Siegeleinrichtung hierbei kein Problem dar, weil bei entsprechendem Packmittel und der Ausgestaltung der Überlappungsnaht sich diese Versiegelung automatisch einstellen kann. Dies führt auch zu einem sehr sauberen Übergang im Bereich der Außenkante des Außeneinschlags zum daran angrenzenden Bereich des Packmittels. Ein solcher sauberer Übergang lässt sich durch bekannte Andrückverfahren in aller Regel nicht herstellen, weil eine Stufe verbleibt.

Ein entsprechend sauberer Übergang kann nochmals dadurch verbessert werden, dass der Ansaugdruck so gewählt ist, dass sowohl die Außenfläche des Außeneinschlags als auch der an den Inneneinschlag angrenzende Außenflächenbereich des Packmittelzuschnitts an die Siegelfläche der Siegeleinrichtung im Wesentlichen flächig angesaugt werden. Dies führt dann zu einem guten Zusammenspiel zwischen Steifigkeitsverhalten des Packmittels und der Ansaugung. Der Kantenbereich des Außeneinschlags kann dann, an der Stelle, an der der Inneneinschlag beginnt darunter zu liegen, mit dem angrenzenden Packmittel verschweißen. Aber auch die flächig überlappenden Bereiche des Packmittels können aufgrund der Steifigkeit des Packmittels sowie der ansaugenden Luftströmung des Siegelstempels (Bernoulli-Effekt) miteinander versiegeln, durch welche der notwendige Kontakt und der Siegeldruck der Siegelflächen zueinander hergestellt wird.

Des Weiteren kann die Siegeleinrichtung mit ihrer Siegelfläche in geringem Abstand, der maximal 1,5 mm, bevorzugt maximal 1,0 mm, und weiter bevorzugt maximal 0,5 mm beträgt, im Bereich der Überlappungsnaht an der darunterliegenden Produktaußenfläche positioniert werden. Bereits ein derart geringer Abstand reicht für die Verwirklichung der beschriebenen Vorteile aus, weil die Siegeleinrichtung zumindest bereichsweise keinen Siegeldruck gegen das Produkt erzeugt, sondern zum Abheben (insbesondere Ansaugen) des Packmittels im geringen Abstand entfernt zur Produktaußenfläche positioniert wird. Hierbei kann auch gänzlich auf einen Kontakt mit der Produktaußenfläche verzichtet werden, so dass bevorzugt der geringe Abstand größer ist als die zweifache Dicke des Packmittelzuschnitts, also auch im Bereich der Überlappungsnaht kein Siegeldruck auf das Produkt ausgeübt wird.

Möglich ist aber auch, die Rückstellkräfte des an das Produkt angefalteten Packmittels vorteilhaft auszunutzen. Hierzu kann z.B. auch ein druckloses Heranfahren der Siegeleinrichtung bis auf Kontakt (das Packmittel liegt selbstverständlich um das Produkt gefaltet) mit dem Produkt einschließlich Packmittel erfolgen. Die Rückstellkräfte des Packmittels erzeugen dann schon einen gewissen Siegeldruck, der selbstverständlich durch das Abheben, insbesondere Ansaugen, nochmals verstärkt werden kann. Das heißt, dass insbesondere zu Beginn des Fixierschritts (Siegelvorgangs), also zu einem Zeitpunkt, bei dem entsprechende Wärme noch nicht zum Produkt vorgedrungen ist, ein nahes Heranfahren möglich ist. Anschließend muss dann aber zur Produktschonung ein entsprechendes Abheben stattfinden.

Gemäß einer Ausführungsform ist es möglich, dass die Siegeleinrichtung mit ihrer Siegelfläche beim Fixierschritt den geringen Abstand im Bereich der Überlappungsnaht an der darunterliegenden Produktfläche verändert, insbesondere bei fortschreitendem Warmsiegeln vergrößert. Das Packmittelmaterial folgt hierbei der Siegeleinrichtung. Weil hier nur mit geringen Abständen gearbeitet wird, wird die Faltung nicht wesentlich beeinflusst. Das Luftpolster zwischen Innenseite des Packmittels und dem Produkt wird im Laufe des Fixierschritts vergrößert. Dies kann schrittweise, kontinuierlich oder in einem einzigen Schritt erfolgen. Insbesondere eine Vergrößerung bei fortschreitender thermischer Einwirkung kann von Vorteil sein. Hierdurch wird eine thermische Produktschonung bei vorteilhaftem Versiegelungsvorgang verbessert.

Ein weiterer Vorteil besteht gemäß einer Verfahrensvariante darin, dass Produkttoleranzen möglichst keinen Einfluss auf die Versiegelung haben. Hierzu wird vorgeschlagen, dass vor oder während des Fixierschritts das Produkt mittels der unterhalb der Überlappungsnaht liegenden Produktaußenfläche relativ zur Siegelfläche der Siegeleinrichtung ausgerichtet wird. Zum Beispiel können an einem Randbereich oder mehreren Randbereichen der Produktaußenfläche entsprechende Anschläge vorhanden sein, an der die Produktaußenfläche (unter Zwischenlage des Packmittels) zur Anlage kommt. Der Anschlag kann so erfolgen, dass keine Behinderung des Fixierschritts stattfindet und die Siegeleinrichtung entsprechend zum Fixierschritt heranfahren kann. Hierdurch wird eine konstante Lage des Produkts relativ zur Siegelfläche der Siegeleinrichtung erzielt. Die Siegelfläche kann dann immer im gleichen Abstand zu der zugehörigen Produktaußenfläche arbeiten, ohne dass der Fixierschritt unter dem Einfluss von Produkttoleranzen steht.

Bevorzugt kann als Verpackungsmaterial für den Packmittelzuschnitt eine Mono-Folie verwendet werden. Dies hat Vorteile beim Recyceln und eröffnet die Möglichkeit, nachhaltigere Materialien einzusetzen. Des Weiteren werden zusätzliche Inneneinschläge, die als Wärmeschutzbarrieren dienen, vermieden. Das heißt, die Mono-Folie kann alleine zur vollständigen Verpackung des Produkts verwendet werden.

Es besteht weiter gemäß einer Variante die Möglichkeit, dass das Ansaugen am Ende des Fixierschritts, gegebenenfalls mittels eines positiven Druckstoßes, unterbrochen wird. Die Beendigung des Siegelvorgangs kann demnach durch Abschalten der Ansaugung (z.B. eines Vakuums) erfolgen. Das Lösen des Packmittels von der Siegelfläche kann unterstützt werden durch z.B. Druckluft (mittels eines Ablassimpulses), wodurch das Packmittel von der Siegeleinrichtung wegbewegt wird.

Es besteht gemäß einer weiteren Ausgestaltung aber auch die Möglichkeit, dass das Ansaugen mittels eines Unterdrucks erfolgt, der so eingestellt ist, dass ein beim Fixierschritt entstehender Haftverbund zwischen Außeneinschlag und Inneneinschlag der Überlappungsnaht ausreicht, die Ansaugkraft mittels eines Vergrößern des Abstandes zwischen Siegelfläche und der zugehörigen Produktfläche zu überwinden und den Packmittelzuschnitt von der Siegeleinrichtung zu lösen. In solch einem Fall kann die Ansaugung auch kontinuierlich durchlaufen und es ist keine gesteuerte Ansaugung erforderlich, was den Prozess noch weiter vereinfacht. Die Siegeleinrichtung kann dann einfach weiter- bzw. wegbewegt werden, wodurch sich das Packmittel von der Siegelfläche ablöst, ohne die Siegelnaht nachteilig zu beeinflussen.

Durch das erfindungsgemäße Verfahren kann je nach Ausgestaltung eine hohe Prozesssicherheit und gute Toleranz in Bezug auf die Produktausrichtung in allen Dimensionen und zusätzlich der Parallelität zwischen der Siegeleinrichtung und dem Produkt erzielt werden. Insbesondere kann das Packmittel in sehr kurzer Zeit flächig an die Siegelfläche der Siegeleinrichtung bewegt werden, wodurch eine einheitliche Siegelnaht erzeugt werden kann.

Für den Fall, dass unverpackte Produkte in den Siegelbereich transportiert werden, stellt dies auch kein Problem dar, da die Siegeleinrichtung bevorzugt nicht in Kontakt mit dem Produkt kommt, sondern im definierten Abstand betrieben wird. Dadurch kommt es zu keiner Verschmutzung der Siegeleinrichtung durch Produktbestandteile.

Des Weiteren bezieht sich die vorliegende Erfindung auf eine Vorrichtung zum Versiegeln von Verpackungen von empfindlichen Produkten, insbesondere wärmeempfindlichen Produkten wie Schokoladenerzeugnissen und zum Durchführen des Verfahrens nach einem der Ansprüche 1 bis 12. Die Vorrichtung zeichnet sich durch eine Siegeleinrichtung zum Warmsiegeln einer Überlappungsnaht, bevorzugt eines Falteinschlags, aus, die Ansaugmittel zum Abheben der Überlappungsnaht von einem Produkt während des Warmsiegelns aufweist, so dass sich die Überlappungsnaht zumindest zeitweise nicht im Kontakt mit dem Produkt befindet. Die Erzeugung eines Kombinationssiegelwerkzeugs auf diese Art und Weise ermöglicht die Produktion einer vorteilhaften Siegelnaht bei einer gewünschten Produktschonung.

Bevorzugt kann die Siegeleinrichtung Ansaugmittel zum Abheben der Überlappungsnaht aufweisen. Es handelt sich hierbei um eine sehr einfache Abhebetechnik, die mit nur geringem Aufwand umzusetzen ist. Bevorzugt kann die Siegeleinrichtung (Siegelwerkzeug) mit einer oder einer Vielzahl von Bohrungen oder Öffnungen ausgestattet sein oder auch aus einem porösen luftdurchströmbarem Material bestehen, wodurch bevorzugt durch Anlegen eines Vakuums das zu versiegelnde Packmittel an der Siegeleinrichtung gehalten wird. Die Siegeleinrichtung kann bevorzugt hierzu eine Siegelbacke aufweisen, welche die entsprechende Öffnung bzw. Öffnungen (Bohrung(en)) aufweist oder aus einem porösen luftdurchströmbarem Material bestehen. Die Siegeleinrichtung kann mit einer Heizpatrone ausgestattet sein, welche zur Wärmeerzeugung dient. Andere Elemente, wie z.B. zur Induktionserwärmung, können ebenfalls zur Wärmeerzeugung eingesetzt werden. Die Temperatur der Siegeleinrichtung wird günstigerweise mittels Sensoren überwacht, der bzw. die der Regelung der Energiezufuhr dient bzw. dienen.

Im Folgenden wird eine Ausführungsform der vorliegen Erfindung anhand von Zeichnungen näher erläutert. Es zeigen:
- Fig. 1a bis 1c: eine schrittweise Abfolge des erfindungsgemäßen Fixierschritts in einer schematischen Querschnittsansicht und
- Fig. 2: eine Vergrößerung des Bereichs II aus Fig. 1c.

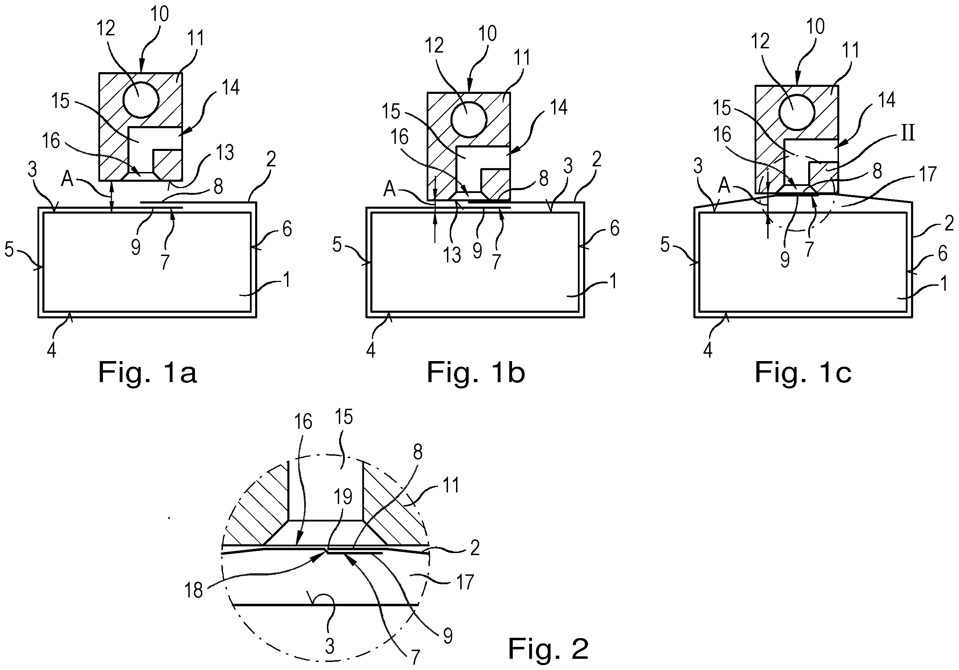

In die Fig. 1a bis 1c ist schrittweise ein Verfahrensablauf zur Verpackung eines im Querschnitt rechteckförmigen, wärmeempfindlichen Produkts 1 beschrieben. Bei dem Produkt 1 handelt es sich um einen Schokoladenriegel. In vorangegangenen Schritten erfolgte die Umfaltung des Produkts 1 mittels eines folienförmigen Packmittelzuschnitts 2 mittels eines Falteinschlags. Neben den dargestellten Flächen des Produkts 1, nämlich der Produktoberseite 3, Produktunterseite 4 sowie den beiden Seitenflächen 5 und 6, sind auch die in den Figuren nicht zu sehenden Endseiten mit Abschnitten des Packmittelzuschnitts 2 versehen. Hierzu kommen die üblichen Endfaltungen bei Falteinschlägen zum Einsatz.

Der noch ungefaltete Packmittelzuschnitt 2 weist eine Rechteckform und entsprechende, an die Abmaße des Produkts 1 angepasste Abmessungen auf, so dass das Produkt 1 vollständig mittels einer geschlossenen Verpackung verpackt werden kann. Bei dem Packmaterial handelt es sich um eine Monofolie aus einem einheitlichen Kunststoffmaterial. Im Gegensatz zu Verbundfolien sind Monofolien nachhaltiger und können besser recycelt werden. Oftmals haben solche Monofolien jedoch kein ausreichendes Dead-Fold-Verhalten. Deshalb muss der Packmittelzuschnitt 2 abschließend fixiert werden.

Aufgrund des Falteinschlags entsteht in Längsrichtung des Produkts 1 gesehen in etwa der Mitte der Produktoberseite 3 eine Überlappungsnaht 7, so dass sich ein Außeneinschlag 8 und ein Inneneinschlag 9 im Bereich der Überlappungsnaht 7 aufeinanderliegen. Beim Außeneinschlag 8 und Inneneinschlag 9 handelt es sich jeweils um die Längsrandbereiche des Packmittelzuschnitts 2, die an der Produktoberseite 3 zur Überlappung kommen.

In der in Fig. 1a dargestellten Lage erfolgte bereits eine Ausrichtung des mit dem Packmittelzuschnitt 2 umfalteten Produkts 1 anhand der Produktoberseite 3, so dass die Produktoberseite 3 eine Art Referenzfläche für anschließende Siegelvorgänge darstellt.

Zur Fixierung der Überlappungsnaht 7 wird nunmehr eine Siegeleinrichtung 10 verwendet. Für die Erzeugung eines Falteinschlags stehen eine ganze Reihe von verschiedenen Verfahrensabläufen und Maschinen zur Verfügung. Deshalb sollen die nachfolgenden Verfahrensschritte lediglich als relative Bewegungen zwischen dem mit dem Packmittelzuschnitt 2 versehenen Produkt 1 und der Siegeleinrichtung 10 verstanden werden. Demnach kann sich das Produkt 1 mit dem umfalteten Packmittelzuschnitt 2 auf die Siegeleinrichtung 10 zu bewegen, beide können sich bewegen oder die Siegeleinrichtung 10 kann sich auf das Produkt 1 zu bewegen. Des Weiteren stehen lineare Verfahrensabläufe oder rotatorische Verfahrensabläufe sowie Kombinationen derselben zur Auswahl. Verpackungsmaschinen verfügen häufig über mittels Getriebetechnik angesteuerter Einheiten, so dass auch komplexe Bewegungsabläufe zum Inkontaktbringen von verschiedenen Einheiten (hier das umfaltete Produkt 1 und die Siegeleinrichtung 10) möglich sind.

Die Siegeleinrichtung 10 weist als Grundkörper eine Siegelbacke 11 von rechteckförmigem Querschnitt auf. In der Siegelbacke 11 ist eine Heizpatrone 12 angeordnet, mittels derer die Siegeleinrichtung 10 auf die gewünschte Siegeltemperatur an der Siegelfläche 13 gebracht werden kann. Die Siegelfläche 13 ist bei dem hier vorliegenden Siegelvorgang im Wesentlichen parallel zur Produktoberseite 3 ausgerichtet. Mittels nicht näher dargestellter Sensoren und einer Regelung erfolgt die genaue Temperaturführung und Überprüfung der Siegeleinrichtung 10. Die Siegeleinrichtung 10 umfasst darüber hinaus eine Ansaugeinrichtung 14. Hierzu weist die Siegelbacke 11 einen Ansaugkanal 15 auf, der im Winkel von der Seite zur Siegelfläche 13 führt und hier in einer Ansaugöffnung 16 mündet. Die Ansaugeinrichtung 14 ist mit einer nicht näher dargestellten Vakuumeinheit verbunden, die den gewünschten Unterdruck in der Ansaugeinrichtung 14 erzeugt. Die Vakuumeinrichtung kann je nach Verfahrensablauf kontinuierlich arbeiten, also sehr einfach aufgebaut sein, oder speziell angesteuert werden, um Veränderungen im Druckprofil zu erreichen. Im vorliegenden Fall erfolgt eine konstante Ansaugung.

In der Fig. 1a weist die Siegelfläche 13 noch einen relativ großen Abstand A zur Produktoberseite 3 auf. Zu diesem Zeitpunkt ist aufgrund der Positionierung der Produktoberseite 3 mittels nicht näher dargestellter Anschläge eine genaue Ausrichtung der Produktoberseite 3 relativ zur Siegelfläche 13 erzielt, so dass im Folgenden weitere Bewegungsvorgänge nur mit den Toleranzen der durchführenden Maschine behaftet sind. Produkttoleranzen spielen dann keine Rolle mehr. Die nicht näher dargestellten Anschläge können auch so ausgestaltet sein, dass bereits eine Vorfixierung des Falteinschlags erfolgt und auch der Außeneinschlag 8 und der Inneneinschlag 9 hinsichtlich ihrer Überlappung gehalten werden. Gleichzeitig erzeugt die Ansaugung mittels der Ansaugeinrichtung 14 bereits einen Luftstrom, der ebenfalls vorteilhaft für den nachfolgenden Siegelvorgang ist, insbesondere eine gewünschte Kühlwirkung erzielt.

Im weiteren Verfahrensablauf (siehe Fig. 1b) nähern sich die Siegeleinrichtung 10 und das umfaltete Produkt 1 immer weiter an, so dass sich der Abstand A auf ein geringes Maß verkleinert. Ein Heranfahren der Siegelfläche 13 bis auf geringfügig mehr als die doppelte Dicke des Packmaterials, d.h. der Dicke der Überlappungsnaht 7, an die Produktoberseite 3, ist möglich. Hierdurch wird verhindert, dass die Siegeleinrichtung 10 einen Siegeldruck auf das Produkt 1 ausübt. Dennoch wird für einen guten Kontakt zumindest zur Außenseite des Außeneinschlags 8 gesorgt. Gleichzeitig erfolgt auch mittels des Ansaugvorgangs nicht nur ein ebenes Anlegen des Außeneinschlags 8 an der Siegelfläche 13, sondern auch ein Ansaugen des an den Inneneinschlag 9 angrenzenden Bereichs des Packmittelzuschnitts 2. In Fig. 1b ist die Stellung kurz vor dem beschriebenen Saugeinfluss dargestellt. Sobald das Packmittel durch die Luftströmung an die Siegeleinrichtung 10 herangesaugt wird (Bernoulli-effekt) und die Ansaugöffnung 6 (oder mehrerer Ansaugöffnungen) verschließt, wird mittels Aufbau eines Vakuums im Ansaugkanal 15 (oder mehrerer Ansaugkanäle) das Packmittel an der Siegelfläche 13 gehalten. Die mittels der Siegeleinrichtung 10 eingebrachte Wärme dringt nicht sofort in das Produkt 1 ein, weil dieses noch von dem Packmittelzuschnitt 2 abgeschirmt ist und der geringe Abstand A vorhanden ist.

Anschließend vergrößert sich der Abstand A wieder, während die Siegelbacke 11 und die Überlappungsnaht 7 ansonsten ihre Position relativ zueinander so gut wie nicht verändern. Bei kontinuierlich arbeitenden Maschinen erfolgt eine entsprechende Synchronisierung von Siegelbacke 11 und Produkt 1 mittels geeigneter Bewegungsabläufe. Aufgrund des Ansaugens hebt nunmehr die Überlappungsnaht 7 zusammen mit den angrenzenden Abschnitten des Packmittelzuschnitts 2 von der Produktoberseite 3 ab, so dass ein Luftpolster 17 zwischen der Produktoberseite 3 und den darüber angeordneten Abschnitten des Packmittelzuschnitts 2 gebildet wird. Während dieses Vorgangs wird weiter Siegelwärme von der Siegeleinrichtung 10 in die Überlappungsnaht 7 eingetragen. Es kommt zu einem Verbund des Außeneinschlags 8 und des Inneneinschlags 9 mittels Aufschmelzen. Aufgrund des Luftpolsters 17, das als Isolation dient, erfolgt jedoch nur eine vernachlässigbar kleine bis keine Wärmeübertragung von der Siegeleinrichtung 10 an das Produkt 1. Der Abstand A vergrößert sich hierbei auf bis zu 1 mm (d.h. maximal bis zu 2 mm).

Anhand der Fig. 2 wird nunmehr der detailliertere Ablauf im Bereich der Schritte 1b und 1c näher erläutert.

Die Qualität der zu erzeugenden versiegelten Überlappungsnaht 7 hängt von der Wahl der Siegelparameter, d.h. der Siegeltemperatur, Siegelzeit und dem Siegeldruck ab. Bei dem erfindungsgemäßen Verfahren soll möglichst kein Siegeldruck zwischen der Siegelfläche 13 und der Produktoberseite 3 aufgebaut werden, der schädlich für das Produkt 1 sein könnte. Ein gewisser Siegeldruck ist jedoch für die Qualität der Siegelnaht unumgänglich. Der Siegeldruck wird im vorliegenden Fall durch die Rückstellkräfte des Packmittelzuschnitts 2 im Bereich der Überlappungsnaht 7, d.h. in Abhängigkeit des gewählten Materials und dessen Steifigkeit, und aufgrund der Ansaugung sowie durch die Ansaug-Luftströmung (Bernoulli-Effekt) erzeugt. Anhand der Fig. 2 ist zu erkennen, dass die Außenseite des Außeneinschlags 8 plan an der Siegelfläche 13 anliegt. Auch die Außenfläche des an dem Inneneinschlag 9 angrenzenden Bereichs des Packmittelzuschnitts 2 wird plan an die Siegelfläche 13 mittels der Ansaugeinrichtung 14 angesaugt. Hierdurch entsteht im Übergangsbereich (siehe Pfeil in Fig. 2) eine Verformung 18 im Packmittelzuschnitt 2. Aufgrund der Rückstellkräfte des Packmittelzuschnitts 2 wird bereits unabhängig von der Ansaugung eine Andrückkraft erzeugt. Darüber hinaus liegt die Außenkante 19 des Außeneinschlags 8 der Verformung 18 so gegenüber, dass die Außenseite des Außeneinschlags 8 und die Außenseite des an den Inneneinschlag 9 angrenzenden Bereichs des Packmittelzuschnitts 2 plan ineinander übergehen. Das heißt, die Außenkante 19 erfährt im Bereich der Verformung 18 eine entsprechende Versiegelung.

Die Art und Weise der Ansaugung und das Verhalten des Packmittelzuschnitts 2 im Bereich der Überlappungsnaht 7 führt weiter dazu, dass der Siegeldruck mit zunehmender Überdeckung, ausgehend von der Außenkante 19 abnimmt. Das heißt, die stärkste Versiegelung erfolgt im Bereich der Außenkante 19 und die Stärke der Versiegelung nimmt dann entlang der Breite des Inneneinschlags 9 bis zu dessen Außenkante ab.

Die Siegelparameter und die Stärke des Ansaugdrucks sind so aufeinander abgestimmt, dass nachfolgend der Stellung wie sie in Fig. 1c gezeigt ist, der Abstand A wieder vergrößert wird. Die Stärke der Versiegelung ist jedoch mittlerweile so groß, dass die Siegelkraft die Ansaugkraft überwindet und sich der Packmittelzuschnitt 2 von der Siegelfläche 13 löst, ohne nachteiligen Einfluss auf die Verpackung. Aufgrund dieser genauen Abstimmung bedarf es keiner gezielten Veränderung des Ansaugdrucks, sondern lediglich der Überwachung der Prozessparameter. Es ist allerdings auch möglich, bei der Beendigung des Siegelvorgangs durch Abschalten der Vakuumeinrichtung das Ansaugen zu beenden. Gegebenenfalls kann dies durch einen Ablassimpuls mittels Druckluft unterstützt werden. Die Verformung 18 bildet sich nach dem Ablösen des Packmaterials von der Siegelfläche 13 wieder zurück und tritt demnach nur temporär während des Siegelvorgangs auf. Unter ganz bestimmten Umständen (insbesondere mit viel mehr Wärme) kann die Verformung 18 auch beibehalten werden, so dass die beiden Außenflächen im Wesentlichen plan ineinander übergehen. Hierdurch wird eine sehr saubere, optisch wie eine Stumpfnaht aussehende, Siegelnaht erzeugt, die mittels dem bislang verwendeten, auf das Produkt wirkenden Anpressdruck, nicht zu erzielen war.

Die Beheizung der Siegeleinrichtung 10 kann auf vielfältige Weise erfolgen und muss nicht mittels einer Heizpatrone 12 durchgeführt werden. Bei der Verwendung entsprechender Verpackungsmaterialien ist auch eine Induktionserwärmung der Siegelnaht möglich. Aus Nachhaltigkeitsgründen sind jedoch Mono-Folien ohne Zusatzstoffe zu bevorzugen. Das Verfahren eignet sich prinzipiell für alle Überlappungsnähte unabhängig von der ansonsten verwendeten Faltart.

Die Vorteile der vorliegenden Erfindung bestehen hauptsächlich in einer gezielten Produktschonung durch weitgehendste Vermeidung eines Siegeldrucks auf das Produkt 1, einem verringerten, nicht produktschädigenden, jedoch für die Versiegelung zuträglichen Wärmeeintrags sowie einer qualitativ gutaussehenden Überlappungsnaht 7, die aufgrund der guten Versiegelbarkeit entlang der Außenkante 11 des Außeneinschlags 8 einer Stoßnaht ähnelt. Aufgrund des Abhebevorgangs im Bereich der durchzuführenden Versiegelung von der Produktoberseite entsteht ein Luftpolster 17, das eine gute Isolierung darstellt und einen nachteiligen Wärmeeintrag in das Produkt 1 verhindert. Ein weiterer Vorteil besteht bei diesem Siegelverfahren auch darin, dass der Fixierschritt der Überlappungsnaht 7 als abschließender Verarbeitungsschritt für die Verpackung ausgeführt werden und diese hiermit ausschließlich durch diesen Schritt verschlossen werden kann. Es sind demnach keine nachfolgenden Zusatzmaßnahmen, wie z.B. das Heranfalten und Fixieren einer abstehenden Flossennaht am Produkt notwendig, um das abschließende Verpackungsergebnis zu erzielen. Das Verfahren kann auch bei hohen Ausbringungen in einer Verpackungsmaschine angewendet werden. Weiterhin ist es mit diesem neuen Verfahren möglich, verbrauchergerechte Verpackungen herzustellen, welche ohne große Krafteinwirkung und ohne zusätzliche Hilfsmittel zu öffnen sind.

### Bezugszeichenliste

- 1: Produkt
- 2: Packmittelzuschnitt
- 3: Produktoberseite
- 4: Produktunterseite
- 5: Produktseitenfläche
- 6: Produktseitenfläche
- 7: Überlappungsnaht
- 8: Außeneinschlag
- 9: Inneneinschlag
- 10: Siegeleinrichtung
- 11: Siegelbacke
- 12: Heizpatrone
- 13: Siegelfläche
- 14: Ansaugeinrichtung
- 15: Ansaugkanal
- 16: Ansaugöffnung
- 17: Luftspalt
- 18: Verformung
- 19: Außenkante

- A: Abstand (Siegelfläche zu Produktoberseite)

## Patentansprüche

1. Verfahren zum Verpacken von empfindlichen Produkten (1), insbesondere wärmeempfindlichen Lebensmittelprodukten wie Schokoladenerzeugnissen, mit folgenden Schritten:
Umhüllen des Produkts (1) mit einem warmversiegelungsfähigen Packmittelzuschnitt (2), wobei eine Überlappungsnaht (7) erzeugt wird, bei der eine Innenseite eines ersten Kantenbereichs (8) auf eine Außenseite eines zweiten Kantenbereichs (9) des Packmittelzuschnitts (2) gefaltet wird,
Fixieren der Überlappungsnaht (7) mittels Warmsiegeln, indem eine Siegeleinrichtung (10) von außen mit der Überlappungsnaht (7) in Kontakt gebracht wird, und
zumindest zeitweises Abheben der Überlappungsnaht (7) von dem Produkt beim Fixierschritt, so dass sich die Überlappungsnaht (7) zumindest zeitweise nicht im Kontakt mit dem Produkt (1) befindet, wobei die Überlappungsnaht (7) zum Abheben angesaugt wird.

2. Verfahren nach Anspruch 1, **dadurch gekennzeichnet, dass** ein ausreichender Siegeldruck zwischen der Überlappungsnaht (7) und der Siegeleinrichtung (10) mittels des Abhebens der Überlappungsnaht (7) erzeugt wird.

3. Verfahren nach Anspruch 1, **dadurch gekennzeichnet, dass** das Ansaugen mittels der Siegeleinrichtung (10) erfolgt.

4. Verfahren nach einem der Ansprüche 1 bis 3, **dadurch gekennzeichnet, dass** mittels der Siegeleinrichtung (10) ein flächiges Ansaugen des Packmittelzuschnitts (2), bevorzugt über die Überlappungsnaht (7) hinaus, erfolgt, so dass sich ein verändernder Siegeldruck an der Überlappungsnaht (7) einstellt, der mit zunehmender Überdeckung von Außen- und Inneneinschlag (8, 9) abnimmt.

5. Verfahren nach Anspruch 4, **dadurch gekennzeichnet, dass** der Ansaugdruck so gewählt ist, dass sowohl die Außenfläche des Außeneinschlags (8) als auch der an dem Inneneinschlag (9) angrenzende Außenflächenbereich des Packmittelzuschnitts (2) an die Siegelfläche (13) der Siegeleinrichtung (10) im Wesentlichen flächig angesaugt werden.

6. Verfahren nach einem der Ansprüche 1 bis 5, **dadurch gekennzeichnet, dass** die Siegeleinrichtung (10) mit ihrer Siegelfläche (13) beim Fixierschritt in geringem Abstand (A), der maximal 2 mm, bevorzugt maximal 1,5 mm, und weiter bevorzugt maximal 1,0 mm, beträgt, im Bereich der Überlappungsnaht (7) an der darunterliegenden Produktaußenseite (4) positioniert wird.

7. Verfahren nach Anspruch 6, **dadurch gekennzeichnet, dass** der geringe Abstand (A) größer ist als die zweifache Dicke des Packmittelzuschnitts (2).

8. Verfahren nach Anspruch 6 oder 7, **dadurch gekennzeichnet, dass** die Siegeleinrichtung (10) mit ihrer Siegelfläche (13) beim Fixierschritt den geringen Abstand (A) im Bereich der Überlappungsnaht (7) an der darunterliegenden Produktaußenfläche (3) verändert, insbesondere bei fortschreitendem Warmsiegeln vergrößert.

9. Verfahren nach einem der Ansprüche 1 bis 8, **dadurch gekennzeichnet, dass** vor oder während des Fixierschritts das Produkt (1) mittels der unterhalb der Überlappungsnaht (7) liegenden Produktaußenfläche (3) relativ zur Siegelfläche (13) der Siegeleinrichtung (10) ausgerichtet wird.

10. Verfahren nach einem der Ansprüche 1 bis 9, **dadurch gekennzeichnet, dass** als Verpackungsmaterial für den Packmittelzuschnitt (2) eine Mono-Folie verwendet wird.

11. Verfahren nach einem der Ansprüche 1 bis 10, **dadurch gekennzeichnet, dass** das Ansaugen am Ende des Fixierschritts, gegebenenfalls mittels eines positiven Druckstoßes, unterbrochen wird.

12. Verfahren nach einem der Ansprüche 6 bis 10, **dadurch gekennzeichnet, dass** das Ansaugen mittels eines Unterdrucks erfolgt, der so eingestellt ist, dass ein beim Fixierschritt entstehender Haftverbund zwischen Außeneinschlag (8) und Inneneinschlag (9) der Überlappungsnaht (7) ausreicht, die Ansaugkraft mittels eines Vergrößern des Abstands (A) zwischen Siegelfläche (13) und der zugehörigen Produktaußenfläche (3) zu überwinden und den Packmittelzuschnitt (2) von der Siegeleinrichtung (10) zu lösen.

13. Vorrichtung zum Durchführen des Verfahrens nach einem der Ansprüche 1 bis 12, **dadurch gekennzeichnet, dass** eine Siegeleinrichtung (10) zum Warmsiegeln einer Überlappungsnaht (7), bevorzugt eines Falteinschlags, vorgesehen ist und die Siegeleinrichtung (10) Ansaugmittel zum Abheben der Überlappungsnaht (7) von einem Produkt (1) während des Warmsiegelns aufweist, so dass sich die Überlappungsnaht (7) zumindest zeitweise nicht im Kontakt mit dem Produkt (1) befindet.

## Claims

1. A method for packaging sensitive products (1), in particular heat sensitive food products such as chocolate products, comprising the following steps:
Wrapping the product (1) with a heat-sealable packaging blank (2), an overlap seam (7) being produced, in which an inner side of a first edge region (8) is folded onto an outer side of a second edge region (9) of the packaging blank (2),
fixing the overlap seam (7) by means of heat sealing, in that a sealing device (10) is brought into contact with the overlap seam (7) from the outside, and
at least temporarily lifting the overlap seam (7) from the product during the fixing step, so that the overlap seam (7) is at least temporarily not in contact with the product (1), the overlap seam (7) being sucked in for lifting.

2. The method according to claim 1, **characterized in that** a sufficient sealing pressure is generated between the overlap seam (7) and the sealing device (10) by means of the lifting of the overlap seam (7).

3. The method according to claim 1, **characterized in that** the suction takes place by means of the sealing device (10).

4. The method according to one of claims 1 to 3, **characterized in that** a planar suction of the packaging blank (2), preferably beyond the overlap seam (7), is carried out by means of the sealing device (10), so that a changing sealing pressure is set at the overlap seam (7), which decreases with increasing overlap of the outer and inner folds (8, 9).

5. The method according to claim 4, **characterized in that** the suction pressure is selected such, that both the outer surface of the outer wrap (8) and the outer surface area of the packaging blank (2) adjacent to the inner wrap (9) are sucked essentially planar onto the sealing surface (13) of the sealing device (10).

6. The method according to one of claims 1 to 5, **characterized in that** the sealing device (10) during the fixing step is positioned with its sealing surface (13) at a small distance (A), which is at maximum 2 mm, preferably at maximum 1.5 mm, and more preferably at maximum 1.0 mm, in the region of the overlap seam (7) on the underlying product outer side (4).

7. The method according to claim 6, **characterized in that** the small distance (A) is greater than twice the thickness of the packaging blank (2).

8. The method according to claim 6 or 7, **characterized in that** the sealing device (10) with its sealing surface (13) changes the small distance (A) in the region of the overlap seam (7) on the underlying product outer surface (3) during the fixing step, in particular increases it as heat sealing progresses.

9. The method according to one of claims 1 to 8, **characterized in that** before or during the fixing step, the product (1) is aligned relative to the sealing surface (13) of the sealing device (10) by means of the product outer surface (3) lying below the overlap seam (7).

10. The method according to one of claims 1 to 9, **characterized in that** a mono film is used as packaging material for the packaging blank (2).

11. The method according to one of claims 1 to 10, **characterized in that** the suction is interrupted at the end of the fixing step, optionally by means of a positive pressure surge.

12. The method according to one of claims 6 to 10, **characterized in that** the suction takes place by means of a partial vacuum which is set such, that an adhesive bond between the outer wrap (8) and the inner wrap (9) of the overlap seam (7) produced during the fixing step is sufficient to overcome the suction force by increasing the distance (A) between the sealing surface (13) and the associated outer product surface (3) and to release the packaging blank (2) from the sealing device (10).

13. A device for carrying out the method according to one of claims 1 to 12, **characterized in that** a sealing device (10) is provided for heat sealing an overlap seam (7), preferably a fold wrap, wherein the sealing device (10) has suction means for lifting the overlap seam (7) away from a product (1) during heat-sealing, so that the overlap seam (7) is at least temporarily not in contact with the product (1).

## Revendications

1. Procédé d'emballage des produits sensibles (1), en particulier de produits alimentaires sensibles à la chaleur tels que des produits en chocolat, comprenant les étapes ci-dessous consistant à :
envelopper le produit (1) avec une découpe d'emballage thermoscellable (2), dans lequel une couture de recouvrement (7) est créée, une face intérieure d'une première région de bord (8) étant repliée sur une face extérieure d'une deuxième région de bord (9) de la découpe d'emballage (2),
immobiliser la couture de recouvrement (7) par thermoscellage en mettant en contact depuis l'extérieur un dispositif de scellage (10) avec la couture de recouvrement (7), et
soulever au moins temporairement la couture de recouvrement (7) à partir du produit lors de l'étape d'immobilisaation, de sorte que la couture de recouvrement (7) n'est au moins temporairement pas en contact avec le produit (1), dans lequel la couture de recouvrement (7) est aspirée pour être soulevée.

2. Procédé selon la revendication 1, **caractérisé en ce qu'**une pression de scellage suffisante est générée entre la couture de recouvrement (7) et le dispositif de scellage (10) au moyen du soulèvement de la couture de recouvrement (7).

3. Procédé selon la revendication 1, **caractérisé en ce que** l'aspiration s'effectue au moyen du dispositif de scellage (10).

4. Procédé selon l'une quelconque des revendications 1 à 3, **caractérisé en ce qu'**une aspiration à plat de la découpe de matériau d'emballage (2), de manière préférée au-dessus de la couture de recouvrement (7), s'effectue au moyen du dispositif de scellage (10), de sorte qu'une pression de scellage modifiable, qui diminue avec l'augmentation du recouvrement de l'enveloppe extérieure et intérieure (8, 9), est ajustée au niveau de la couture de recouvrement (7).

5. Procédé selon la revendication 4, **caractérisé en ce que** la pression d'aspiration est choisie de sorte que la surface extérieure de l'enveloppe extérieure (8) ainsi que la région de surface extérieure, adjacente à l'enveloppe intérieure (9), de la découpe d'emballage (2) sont aspirées essentiellement à plat au niveau de la surface de scellage (13) du dispositif de scellage (10).

6. Procédé selon l'une quelconque des revendications 1 à 5, **caractérisé en ce que** le dispositif de scellage (10) avec sa surface de scellage (13) est positionné au cours de l'étape d'immobilisation à une faible distance (A), qui est de 2 mm au maximum, de manière préférée de 1,5 mm au maximum et de manière plus préférée de 1,0 mm au maximum, dans la région de la couture de recouvrement (7) sur le côté extérieur de produit (4) sous-jacent.

7. Procédé selon la revendication 6, **caractérisé en ce que** la faible distance (A) est supérieure au double de l'épaisseur de la découpe d'emballage (2).

8. Procédé selon la revendication 6 ou 7, **caractérisé en ce que** le dispositif de scellage (10) avec sa surface de scellage (13) modifie lors de l'étape de immobilisation la faible distance (A) dans la région de la couture de recouvrement (7) au niveau de la surface extérieure de produit (3) sous-jacente, en particulier l'augmente lorsque le scellage à chaud progresse.

9. Procédé selon l'une quelconque des revendications 1 à 8, **caractérisé en ce que,** avant ou pendant l'étape d'immobilisation, le produit (1) est aligné par rapport à la surface de scellage (13) du dispositif de scellage (10) au moyen de la surface extérieure de produit (3) située au-dessous de la couture de recouvrement (7).

10. Procédé selon l'une quelconque des revendications 1 à 9, **caractérisé en ce qu'**un monofilm est utilisé comme matériau d'emballage pour la découpe de matériau d'emballage (2).

11. Procédé selon l'une quelconque des revendications 1 à 10, **caractérisé en ce que** l'aspiration est interrompue à la fin de l'étape d'immobilisation, le cas échéant au moyen d'un coup de pression positive.

12. Procédé selon l'une quelconque des revendications 6 à 10, **caractérisé en ce que** l'aspiration est effectuée au moyen d'une dépression qui est ajustée de sorte qu'une liaison adhésive formée lors de l'étape d'immobilisation entre l'enveloppe extérieure (8) et l'enveloppe intérieure (9) de la couture de recouvrement (7) est suffisante pour surmonter la force d'aspiration au moyen d'une augmentation de la distance (A) entre la surface de scellage (13) et la surface extérieure de produit (3) associée et pour détacher la découpe d'emballage (2) du dispositif de scellage (10).

13. Dispositif de mise en oeuvre du procédé selon l'une quelconque des revendications 1 à 12, **caractérisé en ce qu'**un dispositif de scellage (10) permettant de sceller à chaud une couture de recouvrement (7), de manière préférée une enveloppe repliée, est fourni et le dispositif de scellage (10) présente des moyens d'aspiration permettant de soulever la couture de recouvrement (7) à partir d'un produit (1) pendant le scellage à chaud, de sorte que la couture de recouvrement (7) ne se trouve au moins temporairement pas en contact avec le produit (1).
